Europäisches Patentamt

European Patent Office

Office européen des brevets

(11) Veröffentlichungsnummer: **0 415 138 A2**

# (12) EUROPÄISCHE PATENTANMELDUNG

(21) Anmeldenummer: **90115200.9**

(22) Anmeldetag: **08.08.90**

(51) Int. Cl.⁵: **B23Q 11/12, H02K 9/04**

(30) Priorität: **01.09.89 DE 3928985**

(43) Veröffentlichungstag der Anmeldung:
**06.03.91 Patentblatt 91/10**

(84) Benannte Vertragsstaaten:
**CH DE ES FR GB IT LI**

(71) Anmelder: **INDEX-WERKE GMBH & CO. KG HAHN & TESSKY**
**Plochinger Strasse 92**
**W-7300 Esslingen(DE)**

(72) Erfinder: **Hafla, Dietmar Franz**
**Uhlandstrasse 12**
**W-7066 Hohengehren(DE)**
Erfinder: **Sommer, Günther**
**Eibenweg 7**
**W-7300 Esslingen(DE)**

(74) Vertreter: **Hoeger, Stellrecht & Partner**
**Uhlandstrasse 14 c**
**W-7000 Stuttgart 1(DE)**

(54) **Werkstückspindel-Anordnung für eine Drehmaschine.**

(57) Werkstückspindel-Anordnung für eine Drehmaschine, bei der zur Erzielung einer kurzen Baulänge ein elektrischer Hohlwellenmotor um einen mit der Spindel verbundenen Spannzylinder herum angeordnet ist und Kühlvorrichtungen zur Kühlung des Spannzylinders und des Hohlwellenmotors vorgesehen sind.

FIG. 1

# WERKSTÜCKSPINDEL-ANORDNUNG FÜR EINE DREHMASCHINE

Die Erfindung betrifft eine Werkstückspindel-Anordnung für eine Drehmaschine mit einer hohlen Spindel, welche hinter ihrem zum Anbau einer Werkstück-Spannvorrichtung ausgebildeten vorderen Ende mit einer von wenigstens zwei in axialem Abstand voneinander angeordneten Spindellagern gebildeten Spindellagerung und hinter dieser in axialer Richtung nebeneinander mit einem Hydraulik-Spannzylinder für die Betätigung der Werkstückspannvorrichtung sowie einer Hydrauliköl-Zufuhrvorrichtung für den Spannzylinder versehen ist, und mit einem koaxial zur Spindel angeordneten elektrischen Hohlwellenmotor, welcher einen hohlen Rotor und einen diesen konzentrisch umgebenden Stator aufweist.

Bei bekannten derartigen Werkstückspindel-Anordnungen (siehe z. B. die ältere Anmeldung P 38 44 337.6 der Anmelderin für einen Mehrspindler) ist der Hohlwellenmotor zwischen den Spindellagern um die hohle Spindel herum und konzentrisch zu dieser angeordnet, so daß man mit dem Rotor des Hohlwellenmotors unmittelbar die Spindel antreiben kann. Die bekannten Werkstückspindel-Anordnungen mit Hohlwellenmotor führen aber zu gewissen Nachteilen: Zum einen haben die beengten Einbauverhältnisse zur Folge, daß sich nur Hohlwellenmotoren mit einer verhältnismäßig geringen Antriebsleistung verwenden lassen, weil die im Spindelkasten angeordneten Spindellager nicht in beliebig großem axialem Abstand voneinander angeordnet werden können, und zum anderen führt bei den bekannten Konstruktionen die hohe Betriebswärme des Motors zu Schwierigkeiten bei der Wärmeabfuhr, so daß sich ein die Genauigkeit der Werkstückbearbeitung beeinträchtigendes Aufheizen der Werkstückspindel nur schwer vermeiden läßt. Andererseits bringt der Antrieb einer Werkstückspindel mit einem Hohlwellenmotor erhebliche Vorteile mit sich, weil auf die Teile Riemenscheibe, Antriebsriemen und Motorwippe, wie man sie beim Antrieb einer Werkstückspindel mit Hilfe eines separaten Antriebsmotors und einem Riemenantrieb benötigt, verzichtet werden kann (diese Teile beeinträchtigen auch die Laufruhe der Spindel) und weil eine Werkstückspindel-Anordnung mit Hohlwellenmotor natürlich auch kürzer baut, wie wenn man den Antriebsmotor am Spindelende anordnen würde.

Der Erfindung lag nun die Aufgabe zugrunde, eine Werkstückspindel-Anordnung mit Hohlwellenmotor so auszubilden, daß sie bei möglichst kurzer Gesamtbaulänge den Einsatz leistungsstärkerer Hohlwellenmotoren ermöglicht, und ausgehend von einer Anordnung der eingangs erwähnten Art läßt sich diese Aufgabe erfindungsgemäß dadurch lösen, daß der Hohlwellenmotor wenigstens einen Teil des Spannzylinders und vorzugsweise auch wenigstens einen Teil der Ölzufuhrvorrichtung für den Spannzylinder umgibt und hinter der Spindellagerung angeordnet ist. Bei der erfindungsgemäßen Lösung macht man sich den Umstand zunutze, daß sich bei Anordnungen der in Rede stehenden Art das Gehäuse des Spannzylinders mit der Spindel dreht, so daß die Spindel über das vom Rotor des Hohlwellenmotors umfaßte Spannzylindergehäuse angetrieben werden kann, wenn man den Rotor mit dem Spannzylindergehäuse verbindet. Vorteilhafterweise kann man den als Hohl körper ausgebildeten Hohlwellenmotor aber auch noch nach hinten über mindestens einen Teil der Ölzufuhrvorrichtung für den Spannzylinder ragen lassen, ohne daß dadurch die Baulänge der Gesamtanordnung vergrößert wird. Da bei der erfindungsgemäßen Konstruktion der Hohlwellenmotor nicht zwischen den im Spindelkasten angeordneten Spindellagern angeordnet ist, kann er länger, aber auch mit größerem Durchmesser ausgebildet werden als bei den vorstehend erläuterten bekannten Spindelanordnungen mit Hohlwellenmotor, so daß sich ein leistungsstärkerer Hohlwellenmotor einsetzen läßt. Außerdem eröffnet die erfindungsgemäße Anordnung des Hohlwellenmotors im Vergleich zu Maschinen mit zwischen den Spindellagern im Spindelkasten angeordnetem Hohlwellenmotor bessere Möglichkeiten für das Abführen der Betriebswärme des Antriebsmotors.

Der Anwendungsbereich der vorliegenden Erfindung erstreckt sich nicht nur auf Drehmaschinen mit nur einer Werkstückspindel, sondern natürlich auch auf sogenannte Mehrspindler.

Nachdem eine Hydrauliköl-Zufuhrvorrichtung für den mit der Spindel rotierenden Spannzylinder aus einem mit der Spindel rotierenden Innenteil und einem feststehenden Außenteil besteht, wird das Hydrauliköl in dieser Zufuhrvorrichtung erheblich erwärmt und erwärmt dann seinerseits den Spannzylinder. Deshalb wird vielfach empfohlen, letzteren zu kühlen, um durch einen Temperaturgang bedingt Ungenauigkeiten bei der Werkstückbearbeitung zu vermeiden. Deshalb, und weil, wie erwähnt, auch in einem elektrischen Hohlwellenmotor eine erhebliche Betriebswärme entwickelt wird, ist bei einer bevorzugten Ausführungsform der erfindungsgemäßen Werkstückspindel-Anordnung zwischem dem Rotor des Hohlwellenmotors und dem Spannzylinder eine Kühlvorrichtung vorgesehen, durch die einerseits der Spannzylinder gekühlt und andererseits ein Teil der Betriebswärme des Hohlwellenmotors abgeleitet wird. Bevorzugt, da besonders einfach, werden dabei Kühlmittelkanäle zwischen Rotor und Spannzylinder. Durch diese kann Kühlluft oder ein flüssiges Kühlmittel hindurchgefördert werden, und diese Kühlmittelkanäle können z.B. schraubenlinienförmig zwischen Rotor und Spannzylindergehäuse verlaufen; bei einer anderen Ausführungsform handelt es sich um eine Gruppe von Kühlmittelkanälen, die in axialer Richtung verlaufen oder gegenüber dieser Richtung leicht geneigt sind. Um einen Übergang der Betriebswärme des Hohlwellenmotors auf den Spannzylinder zu vermeiden, ist es des weiteren zweckmäßig, innerhalb des Rotors mindestens zwischen diesem und dem Spannzylinder eine wärmeisolierende Schicht vorzusehen; die Kühlmittelkanäle können dann zwischen dieser wärmeisolierenden Schicht und dem Rotor einerseits und zwischen der wärmeisolierenden Schicht und dem Spannzylinder andererseits verlaufen, wobei es besonders einfach ist, die Kühlmittelkanäle in die wärmeisolierende Schicht selbst einzuarbeiten. Da es zweckmäßig ist, die vordere Stirnseite des Spannzylinders, gegebenenfalls unter Zwischenschaltung eines weiteren Bauelements, mit der Spindel zu verbinden, wird des weiteren empfohlen, die vordere Stirnseite des Spannzylinders mit einer wärmeisolierenden Schicht zu belegen, um auch einen Wärmeübergang in axialer Richtung vom Spannzylinder auf die Spindel weitgehend zu unterbinden. Schließlich ist bei einer bevorzugten Ausführungsform auch der Stator des Hohlwellenmotors mit Kühlmittelkanälen versehen. Dabei ist es besonders günstig, diese Kühlmittelkanäle zwischen dem Stator und einem diesen umgebenden Statorgehäuse anzuordnen. Wie bereits erwähnt, kann als Kühlmittel Luft verwendet werden; dann ist es vorteilhaft, den Rotor so zu gestalten, daß er, wenn er läuft, eine Ventilatorfunktion übernimmt und Kühlluft durch die Kühlkanäle fördert. Wird eine Kühlflüssigkeit wie Öl, Wasser oder dgl. verwendet, empfiehlt es sich, zur Erzielung einer Zwangskühlung dieses durch die Kühlmittelkanäle hindurchzupumpen. Wenn das Statorgehäuse an demjenigen Bauteil befestigt ist, in dem die Spindel gelagert ist, insbesondere also am Spindelkasten, wird schließlich empfohlen, auch die vordere Stirnseite des Statorgehäuses mit einer wärmeisolierenden Schicht zu belegen, um einen Wärmeübergang vom Statorgehäuse auf den Spindelkasten zu verhindern.

Beim Bearbeiten eines von der stillstehenden Werkstückspindel gehaltenen Werkstücks mit einem angetriebenen Werkzeug können erhebliche Zerspanungskräfte auftreten, welche ein Drehmoment an der Werkstückspindel bewirken können. In solchen Fällen ist es weit günstiger, die Werkstückspindel mit einer Bremse oder einer anderen Blockiervorrichtung festzuhalten, als diese Aufgabe dem Spindelantriebsmotor zu übertragen. Da man nun bei der erfindungsgemäßen Spindelanordnung zweckmäßigerweise zwischen Spannzylindergehäuse und der eigentlichen Spindel ohnehin eine Trenn- und Verbindungsstelle vorsieht, über die die Spindel durch das vom Hohlwellenmotor angetriebene Spannzylindergehäuse angetrieben wird, eignet sich diese Stelle besonders gut dafür, in die Anordnung eine Haltebremse für die Werkstückspindel zu integrieren. Deshalb ist bei einer bevorzugten Ausführungsform zum Festlegen der Spindel zwischen der Spindellagerung und dem Spannzylinder eine Haltebremse angeordnet, die vorzugsweise auf dem hinteren Ende der Spindel sitzt und sowohl mit diesem hinteren Spindelende als auch mit dem Spannzylindergehäuse drehfest verbunden ist.

Wegen der geringen Baulänge empfiehlt es sich, diese Haltebremse als Scheibenbremse auszubilden, mit der Folge, daß zum Festlegen der Spindel die Bremsscheibe außerhalb der Spindellagerung und neben dem Hohlwellenmotor angeordnet ist. Dieser Bremsscheibe können erfindungsgemäß noch weitere Aufgaben übertragen werden: Um die Werkstückspindel in einer oder mehreren ganz bestimmten Drehwinkelpositionen blockieren und in einer solchen Position sehr präzise ausrichten zu können, ist bei einer besonders vorteilhaften Ausführungsform der Bremsscheibe eine schaltbare Blockier- und Ausrichtvorrichtung zugeordnet. Diese besteht insbesondere aus einer am Umfang der Bremsscheibe vorgesehenen Kerbe mit keilförmig verlaufenden Wänden und einem stationären Keil, der in radialer Richtung in diese Kerbe eingefahren und aus dieser wieder herausgezogen werden kann. Zusätzlich oder alternativ kann der Bremsscheibe eine Drehwinkel-Kodiervorrichtung zugeordnet sein, die dann zu einem besonders hohen Auflösungsvermögen des so gebildeten Drehwinkelgebers führt.

Bei dem Hohlwellenmotor handelt es sich insbesondere um einen regelbaren Drehstrommotor.

Weitere Merkmale, Vorteile und Einzelheiten der Erfindung ergeben sich aus der nachfolgenden Beschreibung und der beigefügten zeichnerischen Darstellung einiger bevorzugter Ausführungsformen der erfindungsgemäßen Werkstückspindel-Anordnung; in der Zeichnung zeigen:

Fig. 1 einen axialen Schnitt durch eine erste Ausführungsform der erfindungsgemäßen Werkstückspindel-Anordnung;

Fig. 2 einen Schnitt nach der Linie 2-2 in Fig. 1;

Fig. 3 einen Schnitt nach der Linie 3-3 in Fig. 1;

Fig. 4 einen axialen Schnitt durch eine zweite Ausführungsform der erfindungsgemäßen Werkstückspindel-Anordnung;

Fig. 5 einen axialen Schnitt durch eine dritte Ausführungsform, und

Fig. 6 einen axialen Schnitt durch eine vierte Ausführungsform der erfindungsgemäßen Werkstückspindel-Anordnung.

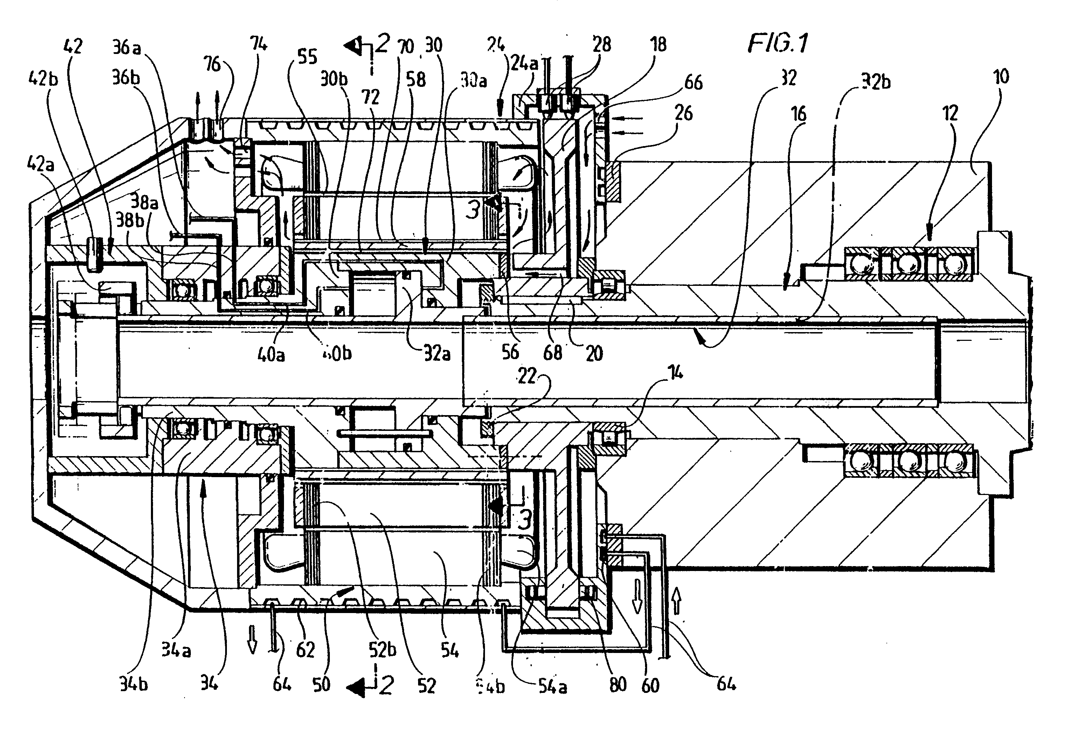

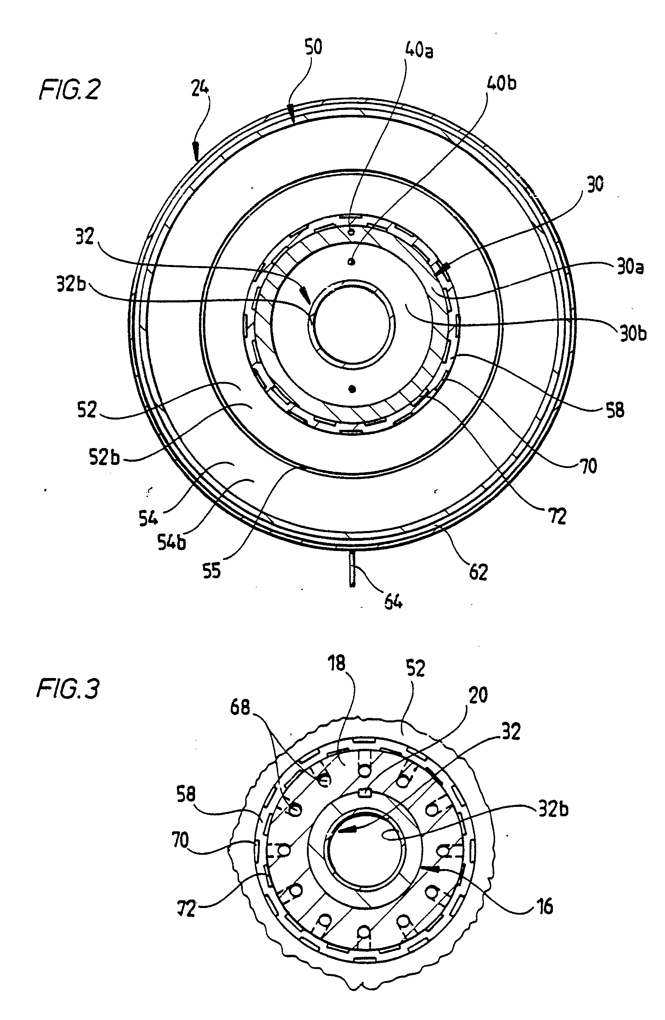

Anhand der Figuren 1 bis 3 soll nun der Aufbau der ersten Ausführungsform näher erläutert werden.

In einem Spindelkasten 10 ist mit Hilfe vorderer Spindellager 12 und einem im axialen Abstand von diesen angeordneten hinteren Spindellager 14 eine Werkstückspindel 16 drehbar gelagert. An deren vorderes, gemäß Fig. 1 rechtes Ende wird eine nicht dargestellte Werkstückspannvorrichtung angebaut, z. B. eine übliches Backenfutter. Die Spindel 16 ist als Hohlspindel ausgebildet, so daß von hinten, d. h. gemäß Fig. 1 von links, Stangenmaterial zur Herstellung der gewünschten Werkstücke bis in den Arbeitsraum einer Drehmaschine vorgeschoben werden kann. Auf das hintere, gemäß Fig. 1 linke Ende der Spindel 16 ist eine Bremsscheibe 18 aufgeschoben, die mittels einer Paßfeder 20 und einer üblichen Nut-Feder-Verbindung mit der Spindel 16 drehfest verbunden ist. Auf das hintere Ende der Spindel 16 ist eine Nutmutter 22 aufgeschraubt, durch die die Bremsscheibe 18 auf der Spindel gesichert wird. Die Bremsscheibe 18 wird von einem Teil 24a eines als Ganzes mit 24 bezeichneten und später noch näher erläuterten Statorgehäuses 24 überfangen; dieses Statorgehäuseteil 24a hat die Form eines im Querschnitt ungefähr U-förmigen Gehäuserings und ist unter Zwischenschaltung eines wärmeisolierenden Isolierrings 26 am Spindelkasten 10 z. B. mittels Schrauben befestigt. Bei dieser Ausführungsform ist die Bremsscheibe 18 Bestandteil einer Drehwinkel-Kodiervorrichtung, und ihr Umfang ist mit einer entsprechenden Kodierung versehen, welche von zwei Tastern 28 abgetastet wird, welche im statorgehäuseteil 24a befestigt sind.

Wie im unteren Teil der Fig. 1 strichpunktiert angedeutet wurde, sind Gehäuseteile 30a und 30b eines Spannzylindergehäuses 30 mit der Bremsscheibe 18 und miteinander mittels nicht gezeichneter Schrauben fest verbunden; im Spannzylindergehäuse 30 ist eine Kolbenscheibe 32a eines aus dieser und einer gegebenenfalls mehrteiligen Kolbenstange 32b zusammengesetzten Kolbens 32 angeordnet, wobei bei dieser Ausführungsform der Spannzylinder 30, 32 als Hohlspannzylinder ausgebildet ist, d. h. die die Spindel 16 durchgreifende Kolbenstange 32b ist gleichfalls hohl. Mit der Kolbenstange 32b kann die am vorderen Ende der Spindel 16 angeordnete Werkstück-Spannvorrichtung betätigt werden.

Hinter dem eigentlichen Spannzylinder 30, 32 ist eine Hydrauliköl-Zufuhrvorrichtung 34 angeordnet, welche ein staionäres Außenteil 34a und ein mit der Spindel 16 rotierendes Innenteil 34b besitzt, welches hier vom hinteren Ende des Gehäuseteils 30b des Spannzylindergehäuses 30 gebildet wird. Zum Außenteil 34a führende Hydraulikölleitungen wurden mit 36a und 36b bezeichnet, Ölbohrungen im Außenteil 34a mit 38a und 38b und Ölbohrungen im Innenteil 34b mit 40a und 40b. Mit Hilfe dieser Ölleitungen und Ölbohrungen lassen sich beide Seiten der Kolbenscheibe 32a mit Hydrauliköl bzw. Druck beaufschlagen. Da derartige Ölzufuhrvorrichtungen an sich bekannt sind, bedarf es keiner näheren Erläuterung ihres Aufbaus und ihrer Funktion, da sie immer demselben Zweck dienen, nämlich eine Ölzufuhr bzw. eine Ölableitung von einem stationären Teil zu einem rotierenden Teil zu bewerkstelligen.

Erfindungsgemäß ist an das hintere Ende der Kolbenstange 32b eine als Ganzes mit 42 bezeichnete Spannwegüberwachung angebaut, die aus einem hohlzylindrischen Geber 42a und einem stationären Sensor 42b besteht (die Kolbenscheibe 32a und die Kolbenstange 32b rotieren ja zusammen mit dem Spannzylindergehäuse 30 und der Spindel 16). In Fig. 1 wurde die Kolbenscheibe 32a in ihrer rechten Endstellung gezeigt, ebenso ist der Geber 42a mit ausgezogenen Linien in seiner rechten Endstellung dargestellt, während strichpunktiert die linke Endstellung des Gebers 42a angedeutet wurde.

Zwischen dem Spannzylindergehäuse 30 und dem Statorgehäuse 24 ist ein an sich bekannter elektrischer Hohlwellenmotor 50 angeordnet. Dieser besteht in bekannter Weise aus einem innen und konzentrisch zur Achse der Spindel 16 angeordneten Rotor 52 und einem den letzteren konzentrisch umgebenden Stator 54, zwischen denen sich ein schmaler Luftspalt 55 befindet, so daß sich der Rotor 52 im stationären Stator 54 drehen kann. Statorwicklungen wurden mit 54a bezeichnet, Statorbleche mit 54b und Rotorbleche mit 52b. Der Rotor 52 ist in später noch näher zu erläuternder Weise mit dem Spannzylindergehäuse 30 fest verbunden. Wie die Fig. 1 deutlich erkennen läßt, umfaßt der Hohlwellenmotor 50 den Spannzylinder 30, 32, und infolge seiner Ausbildung als Hohlkörper erstreckt er sich erfindungsgemäß über einen Teil der Ölzufuhrvorrichtung 34; es ist aber auch besonders vorteilhaft, wenn bei einer Ausführungsform mit integrierter Bremsscheibe der Hohlwellenmotor 50 sich über die Nabe der Bremsscheibe 18 erstreckt, da dadurch zusätzliche Baulänge für den Hohlwellenmotor gewonnen werden kann.

Nach einem weiteren Merkmal der Erfindung ist zwischen dem mit der Bremsscheibe 18 verschraubten Gehäuseteil 30a und der Bremsscheibe ein wärmeisolierender Isolierring 56 angeordnet, und zwischen dem Rotor 52 des Hohlwellenmotors und dem Gehäuseteil 30a des Spannzylindergehäuses 30 befindet sich ein wärmeisolierender Isolierzylinder 58. Die Bauteile 56 und 58 bestehen aus einem festen Werkstoff mit geringer Wärmeleitfähigkeit, so daß man den Rotor 52, den Isolierzylinder 58 und das Gehäuseteil 30a des Spannzylindergehäuses 30 miteinander verkleben oder durch Aufschrumpfen fest miteinander verbinden kann.

Um die Betriebswärme des Hohlwellenmotors 50 abzuführen und den Spannmittelzylinder 30, 32 zu kühlen, ist die erfindungsgemäße Werkstückspindel-Anordnung mit einer Reihe von Kühlmittelkanälen versehen. Bei der Ausführungsform nach den Figuren 1 bis 3 werden der Spannzylinder und der Rotor des Hohlwellenmotors erfindungsgemäß mit Luft gekühlt (sieht man einmal von der zusätzlichen Kühlung durch das Hydrauliköl ab, mit dem der Spannzylinder beschickt wird), während der Stator des Hohlwellenmotors, zu dem man auch das Statorgehäuse 24 zählen kann, mit einer Kühlflüssigkeit, wie Wasser oder Öl, gekühlt wird. Für letztere sind im Statorgehäuse 24 Kühlmittelkanäle 60 und 62 vorgesehen, welche an Kühlmittelleitungen 64 angeschlossen sind. Erfindungsgemäß dienen die Kühlmittelkanäle 60 der Kühlung desjenigen Bereichs des Statorgehäuseteils 24a, welcher an den Spindelkasten 10 angrenzt, während die Kühlmittelkanäle 62 erfindungsgemäß den eigentlichen Stator 54 umgeben.

Bei der in den Figuren 1 bis 3 dargestellten Ausführungsform soll der Rotor 52 auch die Funktion eines Ventilators haben, welcher Kühlluft durch das Statorgehäuse 24 und durch den Bereich zwischen dem Rotor 52 und dem Spannzylindergehäuse 30 hindurchführt. Zu diesem Zweck besitzt das Statorgehäuse 24 an seiner dem Spindelkasten 10 zugewandten Stirnseite Kühlluft-Eingangsöffnungen 66, in der Nabe der Bremsscheibe 18 sind Kühlbohrungen 68 vorgesehen, in die Innen- und die Außenfläche des Isolierzylinders 58 sind Längsnuten eingearbeitet, welche Kühlmittelkanäle 70 und 72 bilden, und im gemäß Fig. 1 linken Teil des Statorgehäuses 24 sind Kühlluft-Auslaßöffnungen 74 und 76 eingearbeitet. Auf diese Weise kann der sich drehende Rotor 52 Kühlluft durch das Statorgehäuse 24, die Nabe der Bremsscheibe 18 und zwischen Rotor 52 und Spannzylindergehäuse 30 hindurchfördern, so wie dies in Fig. 1 durch Pfeile angedeutet wurde.

Das Statorgehäuseteil 24a nimmt schließlich Bremsbacken 80 für die Bremsscheibe 18 auf, welche in nicht dargestellter Weise betätigt werden, um die Bremsscheibe 18 und damit die Spindel 16 zu blockieren.

Wie sich aus Fig. 1 ergibt, können erfindungsgemäß der Spannzylinder 30, 32 und der Hohlwellenmotor 50 unmittelbar hinter dem hinteren Spindellager 14 angeordnet werden oder jedenfalls nur in einem geringen axialen Abstand vom hinteren Spindellager 14, welcher durch die Baulänge der Bremsscheibe 18 bestimmt wird. Dadurch ergibt sich eine außerordentlich kurz bauende Werkstückspindel-Anordnung. Gleichzeitig kann der Hohlwellenmotor 50 in axialer Richtung verhältnismäßig lang ausgebildet werden, ohne daß sich seine Baulänge zu derjenigen von Spindel, Spannzylinder und Ölzufuhrvorrichtung hinzuaddiert, da er um den Spannzylinder und einen Teil der Ölzufuhrvorrichtung herum angeordnet ist. Schließlich werden Spannzylinder und Hohlwellenmotor optimal gekühlt, und an allen Stellen, an denen ein Wärmeübergang vom Hohlwellenmotor auf die Spindel erfolgen könnte, sind Isolierelemente eingesetzt, um einen solchen Wärmeübergang so klein wie möglich zu halten. Zusätzlich können an allen diesen Stellen Kühlmittelkanäle vorgesehen werden.

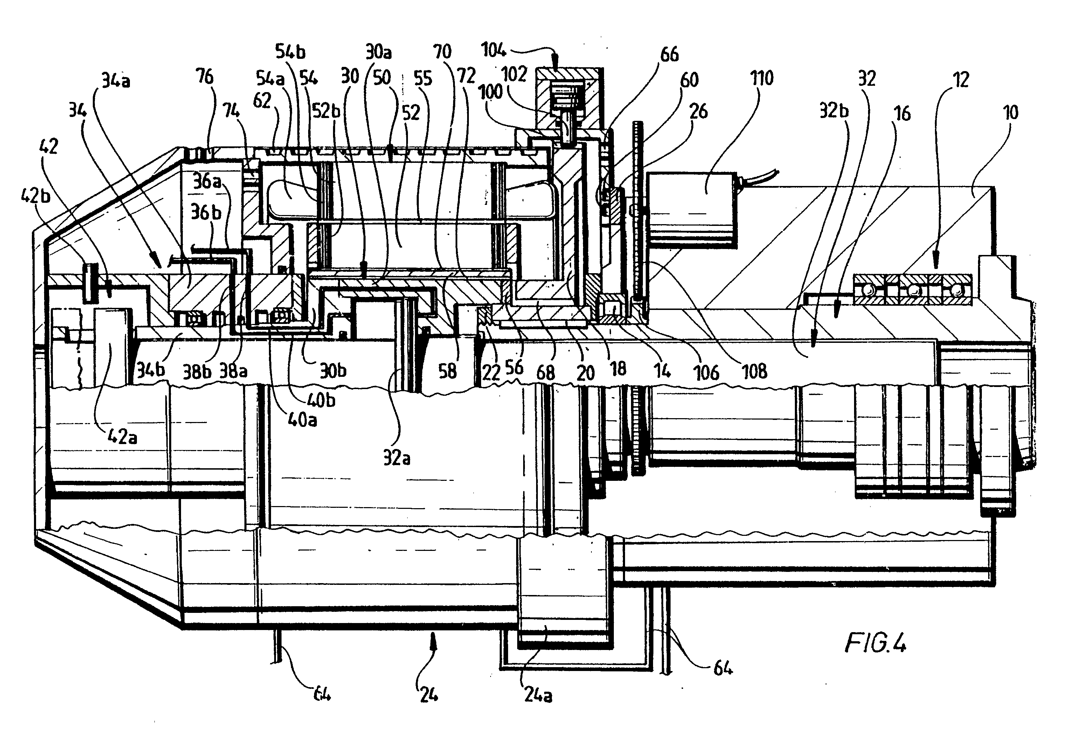

Im folgenden sollen nun die drei weiteren bevorzugten Ausführungsformen nach den Figuren 4 bis 6 beschrieben werden, wobei die Beschreibung auf diejenigen Merkmale beschränkt werden wird, in denen sich diese Ausführungsformen von derjenigen nach den Figuren 1 bis 3 unterscheiden.

Bei der ausführungsform nach Fig. 4 ist der Bremsscheibe 18 eine schaltbare Blockier- und Ausrichtvorrichtung zugeordnet, welche aus einer Positionierkerbe 100 im Umfang der Bremsscheibe 18, einem schaltbaren Positionierbolzen 102 und einem Betätigungszylinder 104 zum radialen Vorschieben und Zurückziehen des Positionierbolzens besteht. Zweckmäßigerweise hat die Positionierkerbe 100 keilförmig schräg verlaufende Seitenwände, und der Positionierbolzen hat ein entsprechend gestaltetes keilförmiges vorderes Ende, welches passend in die kerbe 100 eingreifen kann, so daß sich damit die Bremsscheibe 18 und damit die Spindel 16 nicht nur blockieren, sondern auch drehwinkelmäßig exakt ausrichten läßt.

Erfindungsgemäß ist kurz vor dem hinteren Spindellager 14 ein Zahnrad 106 auf der Spindel 16 befestigt, mit dem ein Zahnrad 108 kämmt, welches ein Drehwinkelmeßgerät 110 betätigt, um so die Spindel 16 über den Hohlwellenmotor 50 drehwinkelmäßig steuern zu können. Auf diese Weise läßt sich eine sogenannte C-Achse für die Spindel 16 verwirklichen. Das Zahnrad 106 kann erfindungsgemäß aber auch neben dem vorderen Spindellager, vorzugsweise unmittelbar hinter diesem, angeordnet werden.

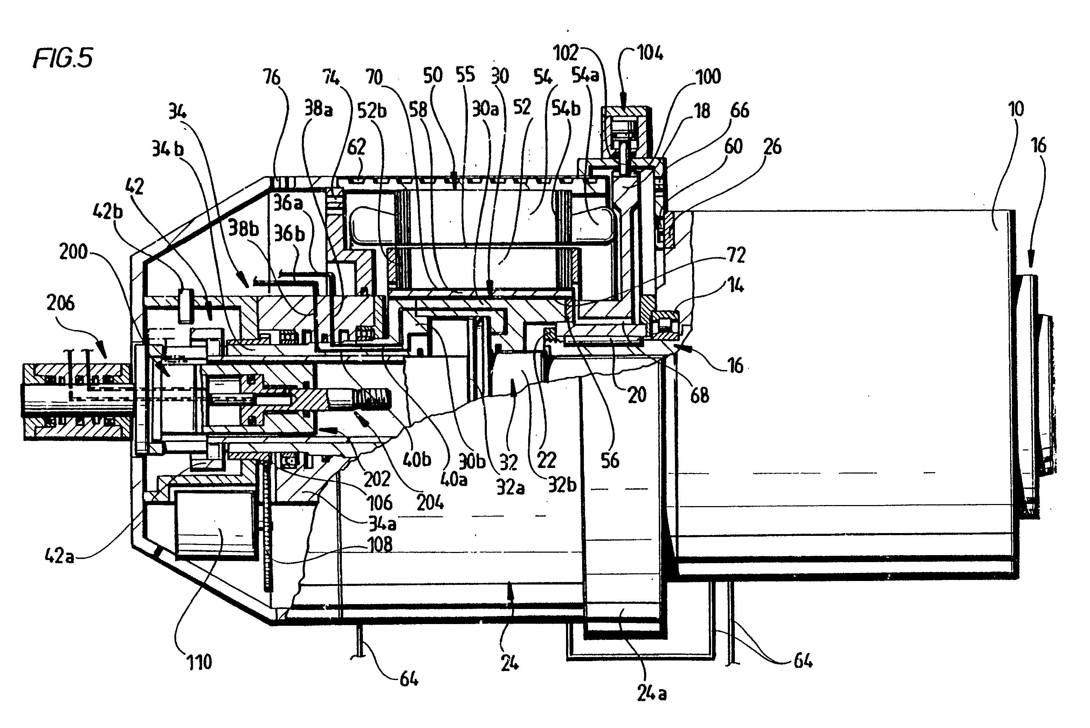

Die Ausführungsform nach Fig. 5 ist mit der schaltbaren Blockier- und Ausrichtvorrichtung 100, 102, 104 der Ausführungsform nach Fig. 4 versehen und weist zusätzlich einen sogenannten Vollspannzylinder 200 auf, der nicht als Hohlkörper ausgebildet ist und aus einem Spannzylindergehäuse 202 sowie einem Spannzylinderkolben 204 besteht. Dem Vollspannzylinder 200 ist eine Ölzufuhrvorrichtung 206 zugeordnet. Erfindungsgemäß ist der Vollspannzylinder 200 in das hintere Ende des Gehäuseteils 30b des Spannzylindergehäuses 30 eingesetzt und ragt in das hintere Ende der Kolbenstange 32b hinein, so daß die Ausführungsform nach Fig. 5 nicht länger baut als die zuvor beschriebenen Ausführungsformen, obwohl ein zweiter Spannzylinder vorgesehen ist, mit dem sich an der von der Spindel 16 getragenen Werkstück-Spannvorrichtung eine zusätzliche Bewegung hervorrufen läßt, insbesondere die Betätigung sogenannter Stirnmitnehmer. Zu diesem Zweck ist natürlich eine in Fig. 5 nicht gezeigte Betätigungsstange oder dergleichen vorgesehen, die mit dem Spannzylinderkolben 204 verbunden ist und durch die hohle Kolbenstange 32b nach vorn bis zur Werkstück-Spannvorrichtung führt.

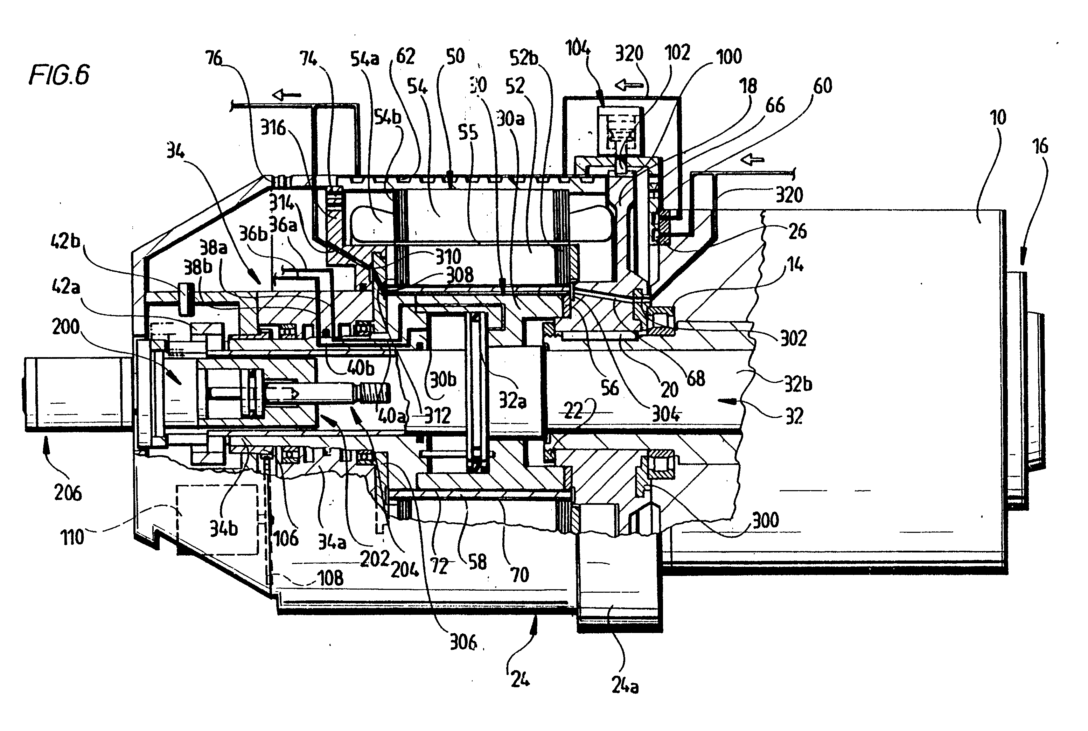

Die Ausführungsform nach Fig. 6 ist mit derjenigen nach Fig. 5 identisch. Als Besonderheit besitzt die Ausführungsform nach Fig. 6 jedoch eine Zwangsflüssigkeltskühlung auch für den Spannzylinder 30, 32 und den Rotor 52. Zu diesem Zweck ist ein dem hinteren Spindellager 14 benachbarter stationärer Ring 300 mit einer Einspritzöffnung 302 versehen, an dem die Kühlbohrungen 68 der Bremsscheibe 18 vorbeilaufen, so daß sich über diese und eine Ringnut 304 in der Nabe der Bremsscheibe 18 die Kühlmittelkanäle 70 und 72 mit Kühlflüssigkeit speisen lassen. An der anderen Stirnseite des Rotors 52 ist ein sich mit dem Spannzylindergehäuse 30 verbundener und deshalb mit diesem drehender Deckel 306 vorgesehen, der an seinen beiden Stirnseiten mit Ringnuten 308 bzw. 310 versehen ist, welche über Kühlbohrungen 312 miteinander verbunden sind. Über eine Kühlmittelbohrung 314 in einer Zwischenwand 316 des Statorgehäuses 24 wird die Kühlflüssigkeit von der Ringnut 310 abgeführt. Kühlmittelleitungen 320 wurden nur durch Striche und die Strömungsrichtung der Kühlflüssigkeit markierende Pfeile angedeutet.

**Ansprüche**

1. Werkstückspindel-Anordnung für eine Drehmaschine mit einer hohlen Spindel, welche hinter ihrem zum Anbau einer Werkstück-Spannvorrichtung ausgebildeten vorderen Ende mit einer Spindellagerung und hinter dieser mit einem Hydraulik-Spannzylinder für die Betätigung der Werkstück-Spannvorrichtung versehen ist, und mit einem koaxial zur Spindel angeordneten elektrischen Hohlwellenmotor, welcher einen hohlen Rotor und einen diesen konzentrisch umgebenden Stator aufweist, **dadurch gekennzeichnet,** daß der Hohlwellenmotor wenigstens einen Teil des Spannzylinder (30, 32) umbigt und hinter der Spinndellagerung (12, 14) angeordnet ist.

2. Anordnung nach Anspruch 1, dadurch gekennzeichnet, daß innerhalb des Rotors (52) mindestens zwischen diesem und dem Spannzylinder (30, 32) Kühlmittelkanäle (70, 72) vorgesehen sind.

3. Anordnung nach Anspruch 1 oder 2, dadurch gekennzeichnet daß innerhalb des Rotors (52) mindestens zwischen diesem und dem Spannzylinder (30, 32) eine wärmeisolierende Schicht (58) vorgesehen ist.

4. Anordnung nach den Ansprüchen 2 und 3, dadurch gekennzeichnet, daß sowohl zwischen Rotor (52) und wärmeisolierender Schicht (58) als auch zwischen dieser und dem Spannzylinder (30, 32) Kühlmittelkanäle (70 bzw. 72) vorgesehen sind.

5. Anordnung nach einem oder mehreren der vorstehenden Ansprüche, dadurch gekennzeichnet, daß die vordere Stirnseite des Spannzylinders (30, 32) mit einer wärmeisolierenden Schicht (56) belegt ist.

6. Anordnung nach einem oder mehreren der vorstehenden Ansprüche, dadurch gekennzeichnet, daß der Stator (54, 24) mit Kühlmittelkanälen (60, 62) versehen ist.

7. Anordnung nach Anspurch 6, bei der der Hohlwellenmotor von einem Statorgehäuse umfangen ist, dadurch gekennzeichnet, daß Kühlmittelkanäle (62) zwischen Stator (54) und Statorgehäuse (24) und/oder im Statorgehäuse angeordnet sind.

8. Anordnung nach Anspruch 6 oder 7, bei der der Hohlwellenmotor von einem Statorgehäuse umfangen ist, dadurch gekennzeichnet, daß die vordere Stirnseite des Statorgehäuses (24, 24a) mit einer wärmeisolierenden Schicht (26) belegt ist.

9. Anordnung nach einem oder mehreren der vorstehenden Ansprüche, dadurch gekennzeichnet, daß zum Festlegen der Spindel (16) auf dieser zwischen der Spindellagerung (12, 14) und dem Spannzylinder (30, 32) eine Haltebremse (18) angeordnet ist.

10. Anordnung nach einem oder mehreren der vorstehenden Ansprüche, dadurch gekennzeichnet, daß zum Festlegen der Spindel (16) eine Scheibenbremse (18, 80) vorgesehen ist, deren Bremsscheibe (18) außerhalb der Spindellagerung (12, 14) und neben dem Hohlwellenmotor (50) angeordnet ist.

11. Anordnung nach Anspruch 10, dadurch gekennzeichnet, daß der Bremsscheibe (18) eine schaltbare Blockier-und Ausrichtvorrichtung (100, 102, 104) zugeordnet ist.

12. Anordnung nach Anspruch 10 oder 11, dadurch gekennzeichnet, daß der Bremsscheibe (18) eine Drehwinkel-Kodiervorrichtung (28) zugeordnet ist.

13. Anordnung nach einem oder mehreren der vorstehenden Ansprüche, dadurch gekennzeichnet, daß der Hohlwellenmotor (50) wenigstens einen Teil der Ölzufuhrvorrichtung (34) umgibt.

14. Anordnung nach einem oder mehreren der vorstehenden Ansprüche, dadurch gekennzeichnet, daß die Spindellagerung wenigstens zwei in axialem Abstand voneinander angeordnete Spindellager (12, 14) aufweist.

FIG.1

FIG.2

FIG.3

FIG.4

EP 0 415 138 A2

FIG.5

EP 0 415 138 A2

FIG.6

EP 0 415 138 A2